# EUROPEAN PATENT APPLICATION

(11) **EP 0 761 479 A2**
(43) Date of publication of application: **12.03.1997**
(21) Application number: 96111573.0
(22) Date of filing: 18.07.1996
(51) Int. Cl.: B60C 11/11

(54) **Aligning torque generation via inclined lateral tread grooves**

(30) Priority: 24.07.1995 US 505940
(71) Applicant: THE GOODYEAR TIRE & RUBBER COMPANY, Akron, Ohio 44316-0001 (US)
(72) Inventor: Moseley, Dale Jay, Hudson, OH 44236 (US)
(74) Representative: Leitz, Paul

(57) **Abstract**

A tire **(100)** having a tread **(80)** with tread elements **(84,86)** which, when compressed in a radial direction, exhibit a net torque about the tire footprint. The net torque so generated can be directed and designed so as to affect the tire's residual self-aligning torque (also known RSAT). One embodiment of the invention features a tire tread **(80)** having a first tread element **(84)** and a second tread element **(86)**. The first tread element **(84)** is on a first side **(74)** of the tire's circumferential centerline **(CL)** and has a first sidewall **(92)**. The first sidewall **(92)** is a plane which makes an angle **α**1 with a plane passing through the tire's axis of rotation. The second tread element **(86)** is on the second side **(76)** of the tire's circumferential centerline **(CL)** and has a first sidewall **(102)** which is in a plane making an angle **α**2 with a plane passing through the tire's axis of rotation. The angle **α**1 may be different from the angle **α**2 or equal and opposite in sign.

## Description

### 1. Background of the Invention

This invention pertains to the art of pneumatic tires and more specifically to the field of pneumatic tires featuring tread elements which generate a net torque about the tire tread footprint.

### 2. Description of the Related Art

One of the challenges facing tire designers is that of "residual self-aligning torque" or "RSAT." Tire treads have been designed in the past to reduce the undesirable effects of RSAT. For example, in EP-A-0 605 849, a rib-type tire tread is disclosed which has been modified to provide draft anvils in lateral grooves of selected ribs to purportedly compensate for the tire's residual self-aligning torque.

3. The present invention is directed toward a new and improved tire tread design which is effective in use and overcomes the foregoing difficulties in others while providing better and more advantageous overall results.

### 4. Summary of the Invention

In accordance with the present invention, a new and improved tire tread design featuring new and improved tire tread elements is provided which is adapted to address the problem of RSAT.

5. More particularly, in accordance with the invention, a tire tread has tread elements and a circumferential centerline. The tread elements have side walls forming grooves between adjoining tread elements. The tire tread includes a first tread element and a second tread element. The first tread element is on the first side of the tire's circumferential centerline and has first and second side walls. The first side wall of the first tread element is in a plane which makes an angle **α**1 with a plane passing through the tire's axis of rotation. The second tread element is on the second side of the tire's circumferential centerline and also has first and second side walls. The first side wall of the second tread element is in a plane which makes an angle **α**2 with a plane passing through the tire's axis of rotation. The angle **α**1 is different from the angle **α**2.

6. In accordance with another aspect of the invention, the angle **α**1 is of opposite sign to the angle **α**2. According to a still further embodiment, the angle **α**1 is equal and opposite to the angle **α**2.

7. According to a further aspect of the invention, the second wall of the second tread element makes angle **β**2 with a plane passing through the tire's axis of rotation, with **β**1 being different than **β**2.

8. According to a still further aspect of the invention, a tire tread has tread elements, each of the tread elements has a top surface and side walls forming grooves between adjoining tread elements. A first tread element has first and second side walls. The first side wall of the first tread element is in a plane which makes an angle **α**1 with a plane passing through the tire's axis of rotation. The second side wall is in a plane which makes an angle **β**1 with the plane passing through the tire's axis of rotation. A top surface of the first tread element translates relative to the base of the first tread element upon a loading of the tread element. The loading is essentially directed normally to the top surface of the first tread element. The top surface translates in a generally circumferential direction.

9. Still other benefits and advantages of the invention will become apparent to those skilled in the art to which it pertains upon a reading and understanding of the following detailed specification.

### 10. Brief Description of the Drawings

The invention may take physical form in certain parts and certain arrangement of parts, a preferred embodiment of which will be described in detail in the specification and illustrated in the accompanying drawings, which form a part hereof and wherein:
**Figure 1** is a perspective schematic view of a tire tread according to one embodiment of the invention; and,
**Figure 2** is a side schematic view of a portion of a tire tread according to the embodiment of the invention shown in Figure 1 and viewed from the perspective of the "eye" 128 illustrated in Figure 1.
**Figure 3** is a side schematic view of a portion of a tire tread according to the embodiment of the invention shown in Figure 1 and viewed from the perspective of the "eye" 128 illustrated in Figure 1.

### 11. Detailed Description of the Invention

The invention also may be better understood in the context of the following definitions, which are applicable to both the specification and the appended claims:
- "Axial" and "axially" are used herein to refer to lines or directions that are parallel to the axis of rotation of the tire.
- "Circumferential" means lines or directions extending along the perimeter of the surface of the annular tread perpendicular to the axial direction.
- "Circumferential plane" means the plane perpendicular to the tire's axis of rotation and passing through the center of its tread.
- "Footprint" means the contact patch or area of contact of the tire tread with a flat surface at zero speed and under normal load and pressure, including the area occupied by grooves as well as the tread elements.
- "Lateral" means an axial direction.
- "Leading" refers to a portion or part of the tread that contacts the ground first, with respect to a series of such parts or portions during the rotation of the tire in the preferred direction.
- "Inner tread surface" means that part of the tread between the protruding tread lugs.
- "Outer tread surface" or "ground penetrating surface" means the radially outermost surface of the protruding tread lugs.
- "Radial" and "radially" are used to mean directions radially toward or away from the axis of rotation of the tire.
- "Trailing" refers to a portion or part of the tread that contacts the ground last, with respect to a series of such parts or portions during rotation of tire and the preferred direction.

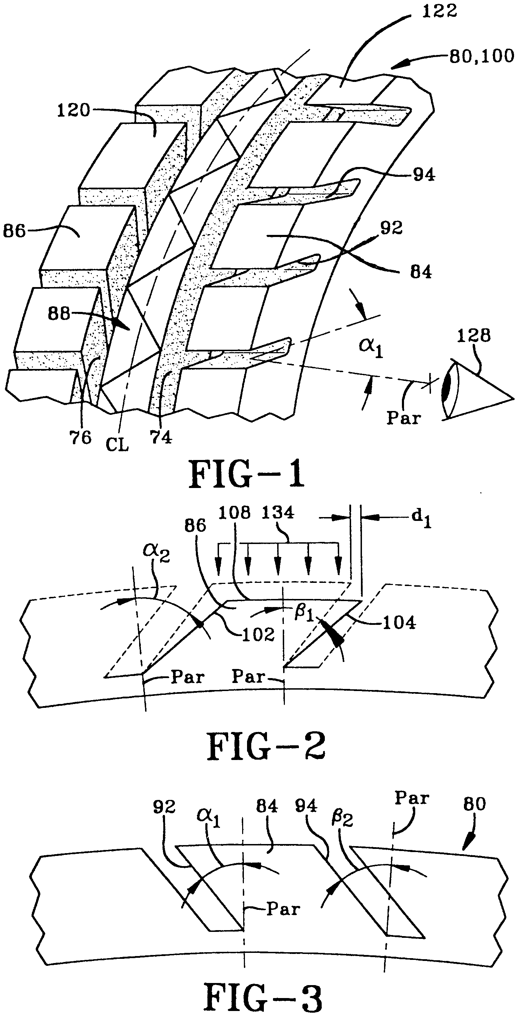

12. With particular reference now to the drawings wherein the showings are for the purposes of illustrating a preferred embodiment of the invention only and not for purposes of limiting the same, Figures 1, 2 and 3 generally show tire treads, tire tread elements, and graphical presentations of the qualities of those tread elements and tire treads. Generally, conventional prior art tire tread elements have vertically oriented sides which meet to form edges. The edges are straight lines generally directed radially toward the rotational axis of the tire. The present invention concerns tire treads which are especially configured to address the tire's residual self-aligning torque (RSAT).

13. With reference to Figure 1, a portion of a tire tread 80 according to a first embodiment of the invention is shown. The tread 80 includes tread elements 84,86. In the tread 80 illustrated in Figure 1, a first row 122 of tread elements on a first side 74 of the tire tread 80 features similar tread elements 84 while a second row 120 of tread elements on a second side 76 of the tire 100 features similar tread elements 86. The tread 80 illustrated in Figure 1 happens to be further characterized by a center row 88 of tread elements, although this feature is not a necessary part of the invention. While the particular tread 80 illustrated has these features, the importance of this aspect of the invention concerns side walls of the tread elements 84, 86, not so much how those tread elements are arranged in the tread.

14. With reference to Figures 1, 2 and 3, the tire tread 80 includes the first tread element 84 and the second tread element 86. The first tread element 84 is on the first side 74 of a circumferential centerline CL of the tire 100. The first tread element 84 has a first side wall 92 and a second side wall 94. With reference to Figure 1, an "eye" 128 is shown to assist the reader in understanding Figures 2 and 3. Both Figures 2 and 3 are illustrated as viewed from eye 128 in Figure 1.

15. As illustrated in Figures 1 and 3, in its unloaded, undeflected state, the first side wall 92 of the first tread element 84 is in a plane which makes an angle **α**1 with a plane P_{AR} passing through an axis of rotation of the tire 100.

16. With reference to Figure 2, the second tread element 86 of the tread 80 has a first side wall 102 which makes an angle **α**2 with a plane P_{AR} passing through the tire's axis of rotation. In a preferred embodiment, **α**2 is equal to **α**1.

17. In other words, the first tread element 84 is configured the same as the second tread element 86 but they are on opposite sides of the tire's circumferential centerline CL and are oriented oppositely. This is best illustrated in Figure 1.

18. With reference to Figure 2, the unloaded undeflected configuration of the first element 84 is shown in dotted lines. Upon a radially-directed load 134 being applied to the top surface 108 of the first tread element 84 and toward the tire's axis of rotation, the first tread element 84 deflects and compresses as shown in the solid line representation. Due to the angular orientation of the first and second side walls 92,94, the top surface 108 of the first tread element 84 actually displaces a distance "d1", as indicated in Figure 2. The displacement d1 is essentially in a plane parallel to the tire's circumferential plane CL. The distance d1 can be between 0.001 inches (0.0025 cm) and 0.200 inches (0.508 cm) or can be some percentage of the tire's circumference or width.

19. Since the first tread element 84 is essentially oriented oppositely to the second tread element 86, a displacement d1 as illustrated in Figure 2 is essentially mirrored by a similar displacement of the second tread element 86, in the same plane but in an opposite direction. Therefore, since the first tread element 84 is displaced a distance d1 on the first side 74 of the tire's circumferential centerline CL, and since the second tread element 86 is displaced a similar distance d1 in the opposite direction and on the second side 76 of the tire's circumferential centerline CL, the tire footprint essentially has a twist or torque placed upon it by the displacements of the first and second tread elements 84,86. This twist or torque can be engineered by the tire designer to combat and alleviate residual self-aligning torque.

20. A second embodiment of the invention, along with the aforementioned first embodiment, is also illustrated in Figure 2. With reference to Figure 2, a second tread element 86 has a first side wall 102 which makes an angle **α**2 with a plane P_{AR} passing through the tire's axis of rotation. The second tread element 86 also has a second side wall 104 which make an angle **β**1 with a plane P_{AR} passing through the tire's axis of rotation. In a conventional prior art tread element, angle **α**2 and angle **β**1 will be equal. However, in the inventive tread element 86, the angles **α**2 and **β**1 are configured so that they are generally not equal. In the preferred embodiment angle **α**2 is between 0 degrees and 45 degrees and angle **β**1 is between 0 degrees and 45 degrees. In a preferred embodiment, angle **α**2 is 20 degrees while angle **β**1 is 20 degrees. In this case, essentially the first embodiment of the invention herein disclosed, the angles **α**1 and **β**1 are equal, although in some cases this may not be preferred and the second embodiment of the invention, where angle **α**2 and **β**1 are different angles, would be preferred.

21. With reference to Figure 3, the first tread element 84 is illustrated showing how the tread element might deflect and showing angles **α**1 and **β**2. The structure and relationship described above in Figure 2 regarding **α**2 and **β**1 is the same as for **α**1 and **β**2 in Figure 3.

22. The above-described relationship between **α**2 and **β**1, as well as between **α**2 and **β**1, works synergistically with the previously described first embodiment of the invention, in which such the side walls 92, 94, 102, and 104 of tread elements 84, 86 are reversed in direction on the opposite side of the tire's circumferential centerline CL to create a net torque. Various aspects of the two embodiments can be incorporated by the tire designer to address residual self-aligning torque and craft an effective solution therefore.

23. Experimental analysis has borne out the desired and predicted effects of the invention. When **α**2 and **β**1 were made of equal angular measurement on a 1 inch x 1 inch x 0.4 inch (2,54 x 2,54 x 10 cm³) rectangular block of rubber, a radially-directed force of 53.8 pounds (240N) generated a circumferential force of 2.4 pounds (10N). When **α**2 was 0 degrees and **β**1 was 20 degrees, the same radially-directed force of 53.8 pounds (240N) generated a circumferential force of 60.7 pounds (270N).

24. The invention has been described with reference to a preferred embodiment. Obviously, modifications and alterations will occur to others upon a reading and understanding of this specification. It is intended to include all such modifications and alterations insofar as they come within the scope of the appended claims.

## Claims

1. A tire tread **(80)** for a tire **(100)** having an axis of rotation, the tread having tread elements **(84,86)** and a circumferential centerline **(CL)**, the tread elements having side walls **(92,94;102,104)** forming lateral grooves between adjoining tread elements, the tire tread characterized by:
a first tread element **(84)** on a first side **(74)** of the circumferential centerline **(CL)**, the first tread element **(84)** having first **(92)** and second **(94)** side walls, said first side wall **(92)** of the first tread element **(84)** being in a plane which makes an angle α1 with a plane passing through the axis of rotation, the second side wall **(94)** being in a plane which makes an angle β2 with the plane passing through the axis of rotation, the angle β2 being different than the angle **α**1; and,
a second tread element **(86)** on a second side **(76)** of the circumferential centerline **(CL)**, the second tread element **(86)** having first **(102)** and second **(104)** side walls, the first side wall **(102)** of the second tread element **(86)** being in a plane which makes an angle **α**2 with a plane passing through the axis of rotation, the second side wall **(104)** of the second tread element **(86)** being in a plane which makes an angle β1 with a plane passing through the axis of rotation, the angle β1 being different than the angle **α**2, wherein **α**2 is opposite in direction to β1.

2. The tire tread **(80)** of claim 1 wherein the angle **α**1 is between 0 degrees and 40 degrees and the angle β2 us between 0 degrees and 40 degrees.

3. A tire tread **(80)** for a tire **(100)** having an axis of rotation and a circumferential plane, said tire tread having tread elements **(84,86)**, the tread elements having top surfaces **(108)**, the tread elements also having side walls forming lateral grooves between adjoining tread elements, the tire tread is characterized by:
a first tread element **(84)**, the first tread element being on a first side **(74)** of said circumferential plane and having first **(92)** and second **(94)** side walls, said first side wall **(92)** of the first tread element being in a plane which makes an angle **α**1 with a plane passing through the axis of rotation, the second side wall **(94)** being in a plane which makes an angle β2 with the plane passing through the axis of rotation, a top surface **(108)** of the first tread element translating a pre-determined distance, d1, in a plane parallel to the circumferential plane relative to a base of the first tread element upon a loading of the tread element; and,
a second tread element **(86)**, the second tread element being on a second side **(76)** of said circumferential plane and having first **(102)** and second **(104)** side walls, said first side wall **(102)** of the second tread element **(86)** being in a plane which makes an angle **α**2 with a plane passing through the axis of rotation, the second side wall **(104)** of the second tread element **(86)** being in a plane which makes an angle β1 with a plane passing through the axis of rotation, a top surface **(108)** of the second tread element translating a pre-determined distance, d2, in a plane parallel to the circumferential plane relative to a base of the second tread element upon a loading of the second tread element, wherein d2 is equal in magnitude and opposite in direction to d1, and wherein a couple generated by d1 and d2 is equal to and opposite in direction to a residual aligning torque of the tire.

4. The tire tread **(80)** of claim 3 wherein d1 is between 0.001 inches (0,0025 cm) and 0.200 inches (0,508 cm).

5. The tire tread **(80)** of claim 3 wherein d1 is between 0.00125 % and 0.25 % of a circumference of the tire **(100)**.

6. The tire tread **(80)** of claim 3 wherein d1 is between 0.0154 % and 3.08 % of a width of the tread.

7. A tire tread **(80)** for a tire **(100)** having an axis of rotation, the tire tread having tread elements **(84,86)** and a circumferential centerline, the tread elements having side walls **(92,94;102,104)** forming grooves between adjoining tread elements, the tire tread is characterized by:
a first tread element **(84)**, the first tread element being on a first side **(74)** of the circumferential centerline **(CL)**, the first tread element having first **(92)** and second **(94)** side walls, said first side wall **(92)** of the first tread element **(84)** being in a plane which makes an angle **α**1 with a plane passing through the axis of rotation;
a second tread element **(86)**, the second tread element being on a second side **(76)** of the circumferential centerline **(CL)**, the second tread element having first **(102)** and second **(104)** side walls, the first side wall **(102)** of the second tread element **(86)** being in a plane which makes an angle **α**2 with a plane passing through the axis of rotation, the angle **α**1 being equal and opposite to the angle **α**2 and, the second side wall **(104)** of the second tread element **(86)** being in a plane which makes an angle β1 with a plane passing through the axis of rotation, the angle β1 being different than **α**2.

8. A method of configuring a tread **(80)** for a tire **(100)** to alleviate residual aligning torque, the tire having a circumferential centerline **(CL)** and an axis of rotation, the tire tread having a first tread element **(84)** on a first side **(74)** of the circumferential centerline and a second tread element **(86)** on a second side **(76)** of the circumferential centerline, the method characterized by the steps of:
inclining a first sidewall **(92)** of the first tread element **(84)** at an angle **α**1 to a plane passing through the axis of rotation;
inclining a second sidewall **(94)** of the first tread element **(84)** at an angle β2 to a plane passing through the axis of rotation;
inclining a first sidewall **(102)** of the second tread element **(86)** at an angle **α**2 to a plane passing through the axis of rotation, **α**2 being inclined in a direction opposite that if **α**1; and,
inclining a second sidewall **(104)** of the second tread element **(86)** at an angle β1 to a plane passing through the axis of rotation, β1 being inclined in a direction opposite that of β2

9. The method of claim 8 further comprising:
applying a radially directed load **(134)** to a top surface **(108)** of said first element **(84)** so that said first element is displaced in a generally circumferential direction a distance d1; wherein d1 is dependent on **α**1 and β2;
applying a radially directed load to a top surface of the second element **(86)** so that the second element is displaced in a generally circumferential direction a distance d2 in a direction opposite to d1; wherein d2 is dependent on **α2** and β1;
measuring a couple generated by displacements d1 and d2; and,
adjusting d1 and d2 to generate a couple equal and opposite to the residual aligning torque of the tire.

10. A method for modifying the tread **(80)** of tires **(100)** to alleviate a residual aligning torque, the tires each having a centerline **(CL)** and an axis of rotation, the method comprising the steps of:
(a) making an unmodified test tire having a predetermined tread pattern, said tread pattern having first tread elements **(84)** on a first side **(74)** of the centerline and second tread elements **(86)** on a second side **(76)** of the centerline, each of said first and second tread elements having a top surface **(108)** and first and second sidewalls **(92,94;102,104)** forming lateral grooves between adjoining tread elements,
(b) determining the residual aligning torque of the test tire,
(c) making a modified test tire having said predetermined tread pattern by inclining the first sidewalls **(92)** of the first tread elements **(84)** an angle **α**1 to a plane passing through the axis of rotation so that said top surface **(108)** of said first elements **(84)** are displaced a distance d1, and inclining a first sidewall **(102)** of the second tread elements **(86)** an angle **α**2 to a plane passing through the axis of rotation so that said top surfaces of the second elements are displaced a distance d2, wherein d2 is opposite in direction to d1;
(d) determining the couple generated on said modified tire by the displacements d1 and d2;
(e) comparing said couple to said residual aligning torque of said test tire; and,
(f) repeating steps (a)-(e) until the couple generated by d1 and d2 is essentially equal in magnitude and opposite in direction to the residual aligning torque of the test tire.
